(19) Europäisches Patentamt
European Patent Office
Office européen des brevets

(11) **EP 2 927 509 A1**

(12) **EUROPÄISCHE PATENTANMELDUNG**

(43) Veröffentlichungstag:
**07.10.2015 Patentblatt 2015/41**

(51) Int Cl.:
*F16B 5/02* (2006.01)   *F16B 37/00* (2006.01)
*B23B 51/00* (2006.01)

(21) Anmeldenummer: **14163294.3**

(22) Anmeldetag: **03.04.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **HILTI Aktiengesellschaft**
**9494 Schaan (LI)**

(72) Erfinder: **Foser, Thomas**
**9496 Balzers (LI)**

(74) Vertreter: **Hilti Aktiengesellschaft**
**Corporate Intellectual Property**
**Feldkircherstrasse 100**
**Postfach 333**
**9494 Schaan (LI)**

(54) **Befestigungsverfahren**

(57)     Verfahren zur Befestigung eines Bauelements (190) an einem Basiselement (100), bei dem in dem Basiselement (100) ein eine Tiefenrichtung (160) definierendes Sackloch (110) mit einer Kraftübertragungsfläche (220) erzeugt wird, welches in der Tiefenrichtung (160) eine Tiefe T aufweist, wobei die Kraftübertragungsfläche (220) kegelstumpfförmig mit einem halben Kegelöffnungswinkel und einem mittleren Durchmesser d ist, wobei das Sackloch (110) einen kegelförmigen Sacklochgrund (120) mit einem Kegelöffnungswinkel α und an seinem Rand eine sich in Tiefenrichtung (160) bis zu einer Fasentiefe L erstreckende Fase (230) aufweist, wobei bei dem Verfahren ein Befestigungselement (130) über die Kraftübertragungsfläche (220) in dem Sackloch (110) verankert wird, und wobei das Bauelement (190) von dem Befestigungselement (130) gehalten wird.

Fig. 1

EP 2 927 509 A1

**Beschreibung**

Die vorliegende Erfindung betrifft ein Verfahren zur Befestigung eines Bauelements an einem Basiselement, bei dem in dem Basiselement ein Sackloch erzeugt wird, ein Befestigungselement in dem Sackloch verankert wird, und das Bauelement von dem Befestigungselement gehalten wird.

Sacklöcher werden üblicherweise mit Bohrern erzeugt, welche an ihren Spitzen mit Schneidkanten bestückt sind. Die Schneidkanten sind gegenüber einer Tiefenrichtung des jeweiligen Sacklochs geneigt angeordnet und bewirken durch Drehung um die Tiefenrichtung einen kegelförmigen Sacklochgrund. Ein Rand des Sacklochs weist zumeist eine Fase auf, so dass sich zwischen der Fase und dem Sacklochgrund eine sich in der Tiefenrichtung erstreckende Kraftübertragungsfläche ausbildet, in die beispielsweise ein selbstschneidendes Gewinde des Befestigungselements ein Gegengewinde einschneidet. Der Sacklochgrund und die Fase tragen üblicherweise nicht zu einer Kraftübertragung zwischen dem Befestigungselement und dem Basiselement bei.

Um möglichst grosse Haltekräfte zu erreichen, wird üblicherweise ausreichend tief gebohrt und ein entsprechend langes Befestigungselement verwendet. Bei plattenförmigen Basiselementen mit vorgegebener Dicke, die darüber hinaus nicht durchbohrt werden sollen, ist die Tiefe des Sacklochs und damit die für eine Verankerung in dem Sackloch wirksame Länge des Befestigungselements beschränkt.

Die Aufgabe der vorliegenden Erfindung besteht darin, ein Befestigungsverfahren anzugeben, bei dem bei gegebener Sacklochtiefe eine grosse Haltekraft des Befestigungselements in dem Sackloch gewährleistet ist.

Die Aufgabe wird gelöst durch ein Verfahren zur Befestigung eines Bauelements an einem Basiselement, bei dem in dem Basiselement ein eine Tiefenrichtung definierendes Sackloch mit einer Kraftübertragungsfläche des Flächeninhalts A erzeugt wird, welches in der Tiefenrichtung eine Tiefe T kleiner als 10 mm aufweist, wobei die Kraftübertragungsfläche kegelstumpfförmig mit einem halben Kegelöffnungswinkel $\beta$ von 0° bis 20° und einem mittleren Durchmesser d ist, wobei das Sackloch einen kegelförmigen Sacklochgrund mit einem Kegelöffnungswinkel $\alpha$ von 60° bis 180° und an seinem Rand eine sich in Tiefenrichtung bis zu einer Fasentiefe L von 0 mm bis 2 mm erstreckende Fase aufweist, wobei der mittlere Durchmesser d der Kraftübertragungsfläche A mindestens

$$d = \left(1 - \sqrt{k}\right)(T - L)\tan\frac{\alpha}{2}$$

und höchstens

$$d = \left(1 + \sqrt{k}\right)(T - L)\tan\frac{\alpha}{2}$$

mit einer maximalen Flächentoleranz k von 0,3 beträgt, wobei bei dem Verfahren ein Befestigungselement über die Kraftübertragungsfläche in dem Sackloch verankert wird, und wobei das Bauelement von dem Befestigungselement gehalten wird.

Das Basiselement besteht dabei bevorzugt aus einem Metall oder einer Legierung. Die Tiefe T des Sacklochs ist vorzugsweise nur etwas kleiner als eine Dicke des insbesondere platten- oder scheibenförmigen Basiselements. Die Tiefe T ist bevorzugt kleiner als 8 mm, besonders bevorzugt kleiner als 6 mm, beispielsweise kleiner als 4 mm. Die Fasentiefe L der Fase beträgt bevorzugt 0 mm bis 0,5 mm, besonders bevorzugt 0 mm bis 0,2 mm, beispielsweise 0,1 mm, wobei eine Fasentiefe von 0 mm bedeutet, dass die Fase nur im mikroskopischen Massstab vorhanden ist.

Der halbe Kegelöffnungswinkel eines Kegels beziehungsweise eines Kegelstumpfs im Sinne der Erfindung ist der Winkel zwischen der Mantellinie und der in Tiefenrichtung des Sacklochs weisenden Achse des jeweiligen Kegels. Der Kegelöffnungswinkel ist das Doppelte davon. Bevorzugt öffnet sich der Kegelöffnungswinkel sowohl für die Kraftübertragungsfläche als auch für den Sacklochgrund von dem Sacklochgrund zu dem Rand des Sacklochs hin. Der mittlere Durchmesser d der Kraftübertragungsfläche ist das arithmetische Mittel des Durchmessers an den beiden stirnseitigen Enden des Kegelstumpfs. Bei einem halben Kegelöffnungswinkel $\beta$ von 0° ist die Form der Kraftübertragungsfläche ein kreisrunder Zylinder als Spezialfall des Kegelstumpfs. Der Kegelöffnungswinkel $\alpha$ des Sacklochgrunds beträgt bevorzugt zwischen 88° und 138°, besonders bevorzugt zwischen 98° und 138°, beispielsweise 118°.

Die Flächentoleranz k ist der Anteil an der maximal möglichen Kraftübertragungsfläche, der als Flächenverlust noch toleriert wird. Der Wert k = 0,3 bedeutet, dass die Kraftübertragungsfläche höchstens 30% weniger als die maximal mögliche Kraftübertragungsfläche beträgt. Bevorzugt ist k = 0,2, besonders bevorzugt ist k = 0,1. Bei k = 0 wird mit dem angegebenen Wert für den mittleren Durchmesser d die maximal mögliche Kraftübertragungsfläche erreicht.

Das Halten des Bauelements wird bevorzugt bereits durch die Verankerung des Befestigungselements in dem Sackloch bewerkstelligt. Gemäss einer bevorzugten Ausgestaltung umfasst daher das Befestigungselement einen Kopf, mittels dessen das Bauelement an dem Basiselement gehalten wird. Ebenfalls bevorzugt wird das Bauelement erst nach der Verankerung an dem Befestigungselement befestigt. Gemäss einer bevorzugten Ausgestaltung umfasst daher das Befestigungselement ein weiteres Lastangriffsmittel, mittels dessen das Bauelement an dem Befestigungselement befestigt wird. Besonders bevorzugt weist der Schaft das weitere Lastangriffsmittel auf.

Eine bevorzugte Ausführungsform ist dadurch gekennzeichnet, dass das Sackloch aus dem Sacklochgrund, der Kraftübertragungsfläche und der Fase besteht. Die Verankerung des Befestigungselements in dem Sackloch geschieht vorzugsweise nur über die Kraftübertragungsfläche, darüber hinaus bevorzugt formschlüssig, reibschlüssig und/oder stoffschlüssig.

Eine bevorzugte Ausführungsform ist dadurch gekennzeichnet, dass das Befestigungselement einen Schaft mit einer Gegenkraftübertragungsfläche aufweist, wobei die Gegenkraftübertragungsfläche mit der Kraftübertragungsfläche wechselwirkt, um das Befestigungselement in dem Sackloch zu verankern. Besonders bevorzugt weist das Befestigungselement ein beispielsweise selbstschneidendes Aussengewinde auf. Eine bevorzugte Ausführungsform ist dadurch gekennzeichnet, dass die Kraftübertragungsfläche ein Innengewinde aufweist. Besonders bevorzugt ist das Innengewinde zu dem Aussengewinde des Befestigungselements komplementär.

Eine bevorzugte Ausführungsform ist dadurch gekennzeichnet, dass das Befestigungselement in das Sackloch gepresst, geklebt, geschweisst, gelötet und/oder geschraubt wird. Das Befestigungselement besteht vorzugsweise aus Metall, einer Legierung oder einem Kunststoff und ist bevorzugt als Schraube, Nagel, Niet, Stift oder Bolzen, besonders bevorzugt als Gewindebolzen ausgebildet.

Eine bevorzugte Ausführungsform ist dadurch gekennzeichnet, dass ein Fasenwinkel zwischen der Fase und der Tiefenrichtung zwischen 30° und 60° beträgt. Besonders bevorzugt beträgt der Fasenwinkel zwischen 40° und 50°, beispielsweise 45°. Eine weitere bevorzugte Ausführungsform ist dadurch gekennzeichnet, dass ein Eintreibwinkel zwischen einer Oberfläche des Basiselements und der Tiefenrichtung mindestens 80° beträgt. Besonders bevorzugt beträgt der Eintreibwinkel mindestens 85°, beispielsweise 90°.

Gemäss einer bevorzugten Ausgestaltung wird das Sackloch in das Basiselement gebohrt. Besonders bevorzugt wird hierfür eine insbesondere elektrisch betriebene Bohrmaschine verwendet. Ebenfalls bevorzugt wird die Tiefe T mit Hilfe eines Anschlagbohrers vorbestimmt, welcher einen besonders bevorzugt als Schulter ausgebildeten Bohreranschlag aufweist. Der Bohrer wird so lange in das Bauelement und/oder das Basiselement eingetrieben, bis der Bohreranschlag an einer Oberfläche des Bauelements beziehungsweise Basiselements anliegt. Die Tiefe des dann als Bohrloch ausgebildeten Sacklochs ist dann so gross wie der Abstand des Bohreranschlags zur Bohrspitze des Anschlagbohrers. Gemäss einer alternativen Ausgestaltung wird die Tiefe T mit Hilfe eines Tiefenanschlags einer Bohrmaschine vorbestimmt.

Gemäss einer Ausführungsform ist der mittlere Durchmesser kleiner oder gleich 8 mm, bevorzugt kleiner oder gleich 7 mm, besonders bevorzugt kleiner oder gleich 6 mm. Dadurch ist das Sackloch unter Umständen mit relativ geringem zeitlichen Aufwand mit einer handgehaltenen Bohrmaschine erzeugbar.

Gemäss einer bevorzugten Ausführungsform ist der mittlere Durchmesser d grösser oder gleich der Tiefe T, bevorzugt grösser als die Tiefe T.

Die Erfindung wird nachstehend anhand von Ausführungsbeispielen unter Bezugnahme auf die Zeichnungen näher erläutert. Es zeigen:

Fig. 1 ein an einem Basiselement befestigtes Befestigungselement und

Fig. 2 eine Auftragung des Flächeninhalts der Kraftübertragungsfläche über deren mittleren Durchmesser für verschiedene Sacklochtiefen.

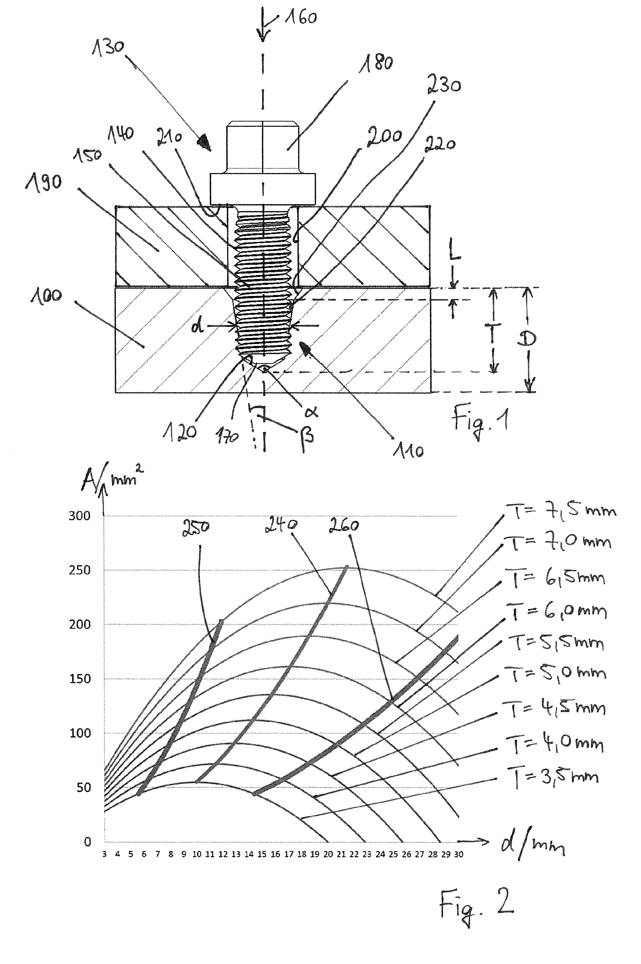

In Fig. 1 ist eine Platte 100 dargestellt, welche im Rahmen der Erfindung ein Basiselement darstellt. Vorzugsweise umfasst oder besteht die Platte 100 aus Metall, insbesondere Aluminium, oder einer Legierung, insbesondere Stahl, oder Beton, insbesondere Porenbeton, oder Kunststoff oder Holz, und bildet bevorzugt eine Wand oder einen Boden beispielsweise eines Schiffes, einer Bohrinsel oder eines Industriegebäudes. Zur Befestigung eines Bauelements 190 an der Platte 100 ist in das Bauelement 190 ein Durchgangsloch 200 und in die Platte 100 ein Sackloch 110 gebohrt, das eine Tiefenrichtung 160 definiert und bei einer Tiefe T einen Sacklochgrund 120 aufweist. Das Durchgangsloch 200 und das Sackloch 110 werden vorzugsweise nacheinander gebohrt. Bei nicht dargestellten Ausführungsbeispielen werden das Durchgangsloch und das Sackloch in einem einzigen Bohrvorgang erzeugt, beispielsweise indem durch das Bauelement hindurch in das Basiselement hineingebohrt wird.

Der Sacklochgrund 120 ist kegelförmig mit einem Kegelöffnungswinkel $\alpha$. An den Sacklochgrund schliesst sich entgegen der Tiefenrichtung 160 eine Kraftübertragungsfläche 220, welche einen Flächeninhalt A sowie einen mittleren Durchmesser d aufweist, an. Die Kraftübertragungsfläche 220 ist kegelstumpfförmig mit einem halben Kegelöffnungswinkel $\beta$. An die Kraftübertragungsfläche schliesst sich entgegen der Tiefenrichtung 160 eine Fase 230 an, welche sich von einem Rand des Sacklochs 110 in Tiefenrichtung 160 bis zu einer Fasentiefe L erstreckt und einen Fasenwinkel von beispielsweise 45° aufweist.

In das Sackloch 110 ist ein als Schraube 130 ausgebildetes Befestigungselement mit einem Schaft 150, welcher ein als insbesondere selbstschneidendes Gewinde 140 ausgebildetes Gegenkraftübertragungsmittel für eine Kraftübertragung auf die Kraftübertragungsfläche 220 trägt, in der Tiefenrichtung 160 eingeschraubt. Das Gewinde 140 erstreckt sich dabei von einer Stirnseite 170 des Schafts 150 über eine Länge entgegen der Tiefenrichtung 160, welche grösser als die die Tiefe T des Sacklochs 110 ist. Bei nicht gezeigten Ausführungsbeispielen ist die Befestigungsvorrichtung als Setz- oder Spreizbolzen ausgebildet, wobei dann das Gegenkraftübertragungsmittel durch eine glatte oder aufgeraute Umfangsfläche des Schafts gebildet ist. Das Gewinde 140 und bevorzugt der Schaft 150 sind zylindrisch mit einem Durchmesser, der im Wesentlichen gleich dem mittleren Durchmesser d ist, ausgebildet. Bei nicht dargestellten Ausführungsbeispielen ist das Gewinde und/oder der Schaft kegelstumpfförmig, bevorzugt mit einem halben Öffnungswinkel, der gleich dem halben Öffnungswinkel β ist, ausgebildet.

Vorliegend betragen D = 8 mm, T = 7,7 mm, β = 9°, α = 118°, L = 1 mm und d = 8 mm. Bei nicht dargestellten Ausführungsbeispielen betragen die Parameterwerte dagegen D = 6 mm, T = 5,7 mm, β = 0°, α = 118°, L = 0 mm und d = 6 mm, beziehungsweise D = 4 mm, T = 3,7 mm, β = 0°, α = 118°, L = 0 mm und d = 5 mm.

Um die vollständige Tiefe T des Sacklochs 110 für eine Kraftübertragung des Gewindes 140 möglichst effektiv nutzbar zu machen, wird einerseits die Tiefe T gezielt vorbestimmt, indem das Sackloch 110 beispielsweise mit einem Anschlagbohrer oder mittels einer kraftbetriebenen Bohrmaschine mit Tiefenanschlag gebohrt wird. Die Tiefe T unterschreitet eine Dicke D des Basiselements 100 nur wenig, bevorzugt weniger als 0,5 mm, besonders bevorzugt weniger als 0,2 mm, beispielsweise 0,1 mm. Andererseits ist bei der Auswahl der Schraube 130 darauf zu achten, dass die Länge des Gewindes mindestens so gross ist wie die Tiefe T.

Die Schraube 130 weist einen Kopf 180 auf, welcher sich an den Schaft 150 entgegen der Tiefenrichtung 160 anschliesst, und dessen in Tiefenrichtung weisende Unterseite ein Widerlager 210 zum Andrücken des Bauelements 190 an die Platte 100 bildet. Das Widerlager 210 weist gegenüber einer Stirnseite 170 des Schaftes 150 entlang der Tiefenrichtung 160 einen axialen Abstand L auf, entlang welchem sich das Gewinde 140 erstreckt. Das Bauelement 190 ist zwischen dem Widerlager 210 und der Platte 100 als Anbauteil festgeklemmt und somit an der Platte 100 befestigt. Der Schaft 150 der Schraube 130 wird dabei vorzugsweise so weit in das Sackloch 110 einschraubt, bis die Stirnseite 170 an dem Sacklochgrund 120 anliegt oder fast anliegt. Dies ist besonders dann vorteilhaft, wenn das Basiselement in Tiefenrichtung nur eine geringe Dicke hat, so dass die verfügbare Tiefe des Sacklochs begrenzt ist.

Der Kopf 180 weist einen beispielsweise als Aussensechskant ausgebildeten Aussenantrieb auf, mittels dessen die Schraube 130 in das Sackloch 110 eingetrieben wird, insbesondere mit einem bevorzugt kraftbetriebenen Schraubgerät, beispielsweise einem Akkuschrauber. Bei nicht dargestellten Ausführungsbeispielen weist der Kopf einen beispielsweise als geraden Schlitz, Kreuzschlitz, Sechsrund, Innensechskant oder Innenvierkant ausgebildeten Innenantrieb auf. Bei weiteren nicht dargestellten Ausführungsbeispielen wird das Bauelement an der Schraube und damit an der Platte befestigt, indem bevorzugt eine Öse, ein Haken oder eine Schlaufe des Bauelements über den Kopf der Schraube gelegt oder eingehängt wird.

Bei nicht dargestellten Ausführungsbeispielen weist das Befestigungselement ein weiteres Lastangriffsmittel zur Befestigung des Bauelements an dem Basiselement auf, welches zusätzlich oder alternativ zu dem Kopf am Kopf oder Schaft angeordnet ist und sich insbesondere entgegen der Tiefenrichtung erstreckt. Das Befestigungselement ist beispielsweise als Schraubbolzen mit einem insbesondere genormten, beispielsweise metrischen oder zöllischen Gewinde als weiterem Lastangriffsmittel ausgebildet, so dass das Bauelement insbesondere mittels einer Schraubenmutter an das Befestigungselement geschraubt und damit an dem Basiselement befestigt wird. Bei weiteren nicht dargestellten Ausführungsbeispielen weist die Schraube ein den Schaft umschliessendes Zwischenelement auf, welches seinerseits ein Dichtelement, vorzugsweise ein Elastomerelement, und/oder ein Abdeckelement umfasst. Eine in Tiefenrichtung weisende Unterseite des Kopfes bildet vorzugsweise ein Widerlager zum Andrücken des Zwischenelements an das Basiselement. Das Zwischenelement wird dann zwischen dem Widerlager und dem Basiselement festgeklemmt.

In Fig. 2 ist der Flächeninhalt A der Kraftübertragungsfläche in mm² über deren mittlerem Durchmesser d in mm für verschiedene Sacklochtiefen T beispielhaft aufgetragen. Der Kegelöffnungswinkel α beträgt für alle dargestellten Kurven 141°, die Fasentiefe L beträgt jeweils 0 mm. Es ist deutlich erkennbar, dass der Flächeninhalt A für jede Sacklochtiefe T ein ausgeprägtes Maximum besitzt, wobei die Maxima auf einer Kurve 240 liegen. Ebenfalls beispielhaft sind für eine Flächentoleranz von k = 0,2 eine untere Begrenzungslinie 250 und eine obere Begrenzungslinie 260 eingezeichnet, zwischen denen der Flächeninhalt A gegenüber seinem jeweiligen Maximalwert höchstens um 20% reduziert ist. Wie sich leicht zeigen lässt, gilt für den Flächeninhalt A der Zusammenhang

$$A = \left( -\frac{\pi}{2} d^2 / \tan\frac{\alpha}{2} \right) + \pi(T - L)d$$

so dass der Flächeninhalt A maximal ist, wenn

$$d = (T - L)\tan\frac{\alpha}{2}$$

Es wird im Übrigen angenommen, dass die übertragbare Kraft zumindest bei Schraubverbindungen proportional zu dem Flächeninhalt der Kraftübertragungsfläche ist.

Die Erfindung wurde anhand von Beispielen einer Vorrichtung zur Befestigung eines Bauelements an einem Basiselement sowie einem Verfahren für eine solche Befestigung beschrieben. Die Merkmale der beschriebenen Ausführungsformen sind dabei auch beliebig miteinander innerhalb einer einzigen Befestigungsvorrichtung beziehungsweise eines einzigen Herstellungsverfahrens kombinierbar. Es wird darauf hingewiesen, dass das erfindungsgemässe Verfahren auch für andere Zwecke geeignet ist.

**Patentansprüche**

1. Verfahren zur Befestigung eines Bauelements an einem insbesondere aus Metall oder einer Legierung bestehenden Basiselement, bei dem in dem Basiselement ein eine Tiefenrichtung definierendes Sackloch mit einer Kraftübertragungsfläche des Flächeninhalts A erzeugt wird, welches in der Tiefenrichtung eine Tiefe T mit T < 10 mm, insbesondere T < 8 mm, insbesondere T < 6 mm, insbesondere T < 4 mm, aufweist, wobei die Kraftübertragungsfläche kegelstumpfförmig mit einem halben Kegelöffnungswinkel β von 0° bis 20° und einem mittleren Durchmesser d ist, wobei das Sackloch einen kegelförmigen Sacklochgrund mit einem Kegelöffnungswinkel α von 60° bis 180°, insbesondere von 88° bis 138°, insbesondere von 98° bis 138°, und an seinem Rand eine sich in Tiefenrichtung bis zu einer Fasentiefe L von 0 mm bis 2 mm, insbesondere 0 mm bis 0,5 mm, erstreckende Fase aufweist, wobei der mittlere Durchmesser d der Kraftübertragungsfläche A mindestens

$$ d = \left(1 - \sqrt{k}\right)(T - L)\tan\frac{\alpha}{2} $$

und höchstens

$$ d = \left(1 + \sqrt{k}\right)(T - L)\tan\frac{\alpha}{2} $$

mit einer maximalen Flächentoleranz k beträgt, wobei k = 0,3, insbesondere k = 0,2, insbesondere k = 0,1, wobei bei dem Verfahren ein Befestigungselement über die Kraftübertragungsfläche in dem Sackloch verankert wird, und wobei das Bauelement von dem Befestigungselement gehalten wird.

2. Verfahren nach Anspruch 1, wobei das Sackloch aus dem Sacklochgrund, der Kraftübertragungsfläche und der Fase besteht.

3. Verfahren nach einem der vorhergehenden Ansprüche, wobei das Befestigungselement nur über die Kraftübertragungsfläche in dem Sackloch verankert wird.

4. Verfahren nach einem der vorhergehenden Ansprüche, wobei das Befestigungselement ein insbesondere selbstschneidendes Aussengewinde aufweist.

5. Verfahren nach einem der vorhergehenden Ansprüche, wobei die Kraftübertragungsfläche ein insbesondere zu dem Aussengewinde komplementäres Innengewinde aufweist.

6. Verfahren nach einem der vorhergehenden Ansprüche, wobei das Befestigungselement in das Sackloch gepresst, geklebt, geschweisst, gelötet und/oder geschraubt wird.

7. Verfahren nach einem der vorhergehenden Ansprüche, wobei ein Fasenwinkel zwischen der Fase und der Tiefenrichtung zwischen 30° und 60°, insbesondere zwischen 40° und 50°, insbesondere 45°, beträgt.

8. Verfahren nach einem der vorhergehenden Ansprüche, wobei ein Eintreibwinkel zwischen einer Oberfläche des Basiselements und der Tiefenrichtung mindestens 80°, insbesondere mindestens 85°, insbesondere 90°, beträgt.

9. Verfahren nach einem der vorhergehenden Ansprüche, wobei das Befestigungselement aus Metall, einer Legierung oder einem Kunststoff besteht.

10. Verfahren nach einem der vorhergehenden Ansprüche, wobei das Sackloch in das Basiselement gebohrt wird.

11. Verfahren nach einem der vorhergehenden Ansprüche, wobei die Tiefe T mit Hilfe eines Anschlagbohrers vorbestimmt wird.

12. Verfahren nach einem der vorhergehenden Ansprüche, wobei die Tiefe T mit Hilfe eines Tiefenanschlags vorbestimmt wird.

13. Verfahren nach einem der vorhergehenden Ansprüche, wobei das Befestigungselement einen Schaft mit einer Gegenkraftübertragungsfläche und insbesondere einen Kopf aufweist, und wobei die Gegenkraftübertragungsfläche mit der Kraftübertragungsfläche wechselwirkt, um das Befestigungselement in dem Sackloch zu verankern.

14. Verfahren nach einem der vorhergehenden Ansprüche, wobei der mittlere Durchmesser d grösser oder gleich der Tiefe T ist.

Fig. 1

Fig. 2

Europäisches
Patentamt

European
Patent Office

Office européen
des brevets

# EUROPÄISCHER RECHERCHENBERICHT

Nummer der Anmeldung

EP 14 16 3294

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 198 42 173 A1 (BUSCH DIETER & CO PRUEFTECH [DE]) 16. März 2000 (2000-03-16) | 1-3,6, 8-10,13, 14 | INV. F16B5/02 |
| Y | * Abbildung 1 * <br> * Spalte 2, Zeilen 38-40 * <br> * Spalte 2, Zeile 57 - Spalte 3, Zeile 19 * <br> * Spalte 3, Zeilen 59-65 * <br> * Ansprüche 1,7,8 * <br> ----- | 4,5,7, 11,12 | ADD. F16B37/00 B23B51/00 |
| Y | DE 10 2011 087683 A1 (BAIER & MICHELS GMBH & CO KG [DE]) 6. Juni 2013 (2013-06-06) <br> * Abbildungen 3-4 * <br> * Absätze [0002], [0035] - [0037] * <br> ----- | 4 | |
| Y | US 6 062 263 A (DONOVAN STEVEN P [US]) 16. Mai 2000 (2000-05-16) <br> * Abbildungen 11-18 * <br> * Spalte 8, Zeile 63 - Spalte 9, Zeile 2 * <br> ----- | 5 | |
| Y | DE 297 21 963 U1 (DUERR PRAEZISIONSWERKZEUGE GMB [DE]) 29. Januar 1998 (1998-01-29) <br> * Abbildung 1 * <br> * Seite 5, Zeilen 19-22 * <br> ----- | 7 | RECHERCHIERTE SACHGEBIETE (IPC) <br> F16B <br> B23B |
| Y | DE 20 2008 000368 U1 (RUKO GMBH PRAEZ SWERKZEUGE [DE]) 13. März 2008 (2008-03-13) <br> * Abbildung 1 * <br> * Absätze [0005], [0015] - [0016] * <br> * Anspruch 1 * <br> ----- | 11 | |
| Y | EP 1 163 982 A2 (HILTI AG [LI]) 19. Dezember 2001 (2001-12-19) <br> * Abbildung 1 * <br> * Absätze [0003], [0021] * <br> ----- | 12 | |

Der vorliegende Recherchenbericht wurde für alle Patentansprüche erstellt

| Recherchenort | Abschlußdatum der Recherche | Prüfer |
|---|---|---|
| München | 11. September 2014 | Schandel, Yannick |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 16 3294

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-09-2014

| Im Recherchenbericht angeführtes Patentdokument | Datum der Veröffentlichung | Mitglied(er) der Patentfamilie | Datum der Veröffentlichung |
|---|---|---|---|
| DE 19842173 A1 | 16-03-2000 | KEINE | |
| DE 102011087683 A1 | 06-06-2013 | DE 102011087683 A1<br>EP 2785479 A1<br>WO 2013083540 A1 | 06-06-2013<br>08-10-2014<br>13-06-2013 |
| US 6062263 A | 16-05-2000 | KEINE | |
| DE 29721963 U1 | 29-01-1998 | AT 204795 T<br>DE 29721963 U1<br>DK 0922517 T3<br>EP 0922517 A1<br>ES 2162382 T3 | 15-09-2001<br>29-01-1998<br>17-12-2001<br>16-06-1999<br>16-12-2001 |
| DE 202008000368 U1 | 13-03-2008 | KEINE | |
| EP 1163982 A2 | 19-12-2001 | CN 1328893 A<br>DE 10029134 A1<br>EP 1163982 A2<br>JP 4799767 B2<br>JP 2002059306 A<br>US 2001052418 A1 | 02-01-2002<br>20-12-2001<br>19-12-2001<br>26-10-2011<br>26-02-2002<br>20-12-2001 |

EPO FORM P0461

Für nähere Einzelheiten zu diesem Anhang : siehe Amtsblatt des Europäischen Patentamts, Nr.12/82